# EUROPEAN PATENT APPLICATION

(11) **EP 1 942 293 A1**
(43) Date of publication of application: **09.07.2008**
(21) Application number: 06811936.1
(22) Date of filing: 18.10.2006
(51) Int. Cl.: F16J 15/32, F16D 25/0638, F16D 25/12

(54) **SEALING DEVICE**

(30) Priority: 28.10.2005 JP 2005314013
(71) Applicant: NOK Corporation, Minato-ku Tokyo 105-8585 (JP)
(72) Inventor: TAGUCHI, Shinichiro, Fukushima-shi Fukushima 960-1102 (JP); KANZAKI, Yoshiyuki, Fukushima-shi Fukushima 960-1102 (JP); GOTO, Kiichiro, Fukushima-shi Fukushima 960-1102 (JP)
(74) Representative: TBK-Patent
(86) International application number: PCT/JP2006/320697
(87) International publication number: WO 2007/049486

(57) **Abstract**

A sealing device having a metallic ring (2) is provided in which, even when the degree of flatness of a pressing part (5) or a flange part (6) of the metallic ring (2) is not strictly regulated, the radial-direction position where the part (5) or (6) is in contact with a mating member (11) can be stabilized and the circumferential-direction distribution of pressure on the mating material (11) can be stabilized. The sealing device comprises a metallic ring (2) and a sealing part, e.g., a packing, wherein the metallic ring (2) has an annular pressing part (5) which has a given radial-direction width and presses the mating material (11) when the metallic ring (2) shifts in the axial direction. The pressing part (5) has a pressing surface (7) which has been formed so as to have an arc-form or wavy section projecting toward the mating member (11). The pressing part (5) comprises a flange part (6) projecting outward and integrally molded with the edge of a cylindrical part (4) of the metallic ring (2). The flange part (6) has a smaller wall thickness than the cylindrical part (4), and has been formed so as to have an arc-form or wavy section and hence have spring properties.

## Description

### BACKGROUND OF THE INVENTION

### Field of the Invention

The present invention relates to a sealing device in accordance with a sealing technique, and more particularly to a sealing device which is suitably used as a bonded piston seal (BPS) in an automatic transmission (AT, CVT or the like) of a vehicle, for example, a motor vehicle.

### Description of the Conventional Art

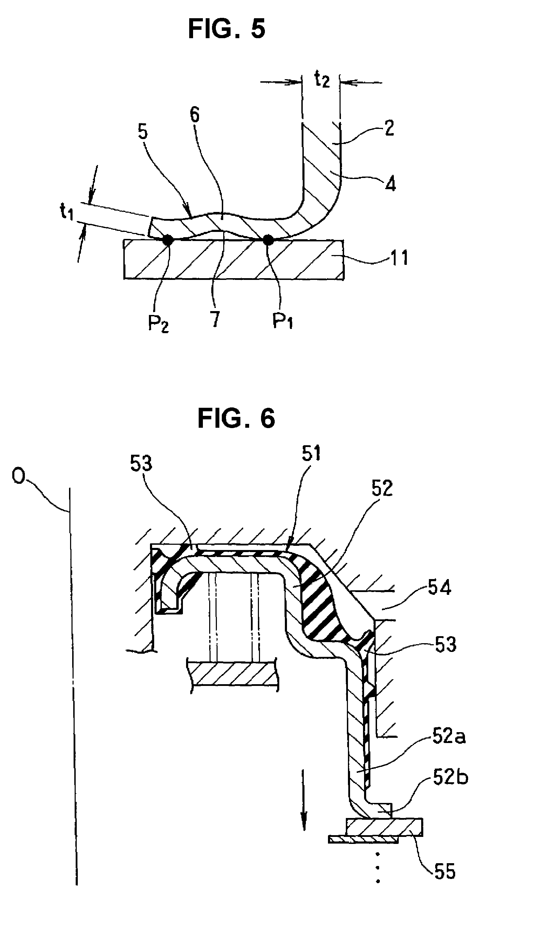

Conventionally, a bonded piston seal 51 shown in Fig. 6 has been known as one kind of a sealing device. The bonded piston seal 51 has a metal ring 52, and a seal portion 53 such as a packing or the like supported to the metal ring 52, and is structured such as to engage a clutch by pressing a clutch plate 55 having a multilayer structure by the metal ring 52 of the bonded piston seal 51 displacing in an axial direction (a vertical direction in the drawing) on the basis of a pressure feed from a port 54 (refer to patent document 1).

The metal ring 52 has an outward flange portion 52b integrally formed at an end of a tubular portion 52a, and an annular pressing portion for pressing the annular clutch plate 54 is formed by the flange portion 52b.

However, since the flange portion 52b constructing the pressing portion has been conventionally formed in a flat plate shape which is perpendicular to a center axis 0 of the bonded piston seal 51, the following disadvantage is generated.

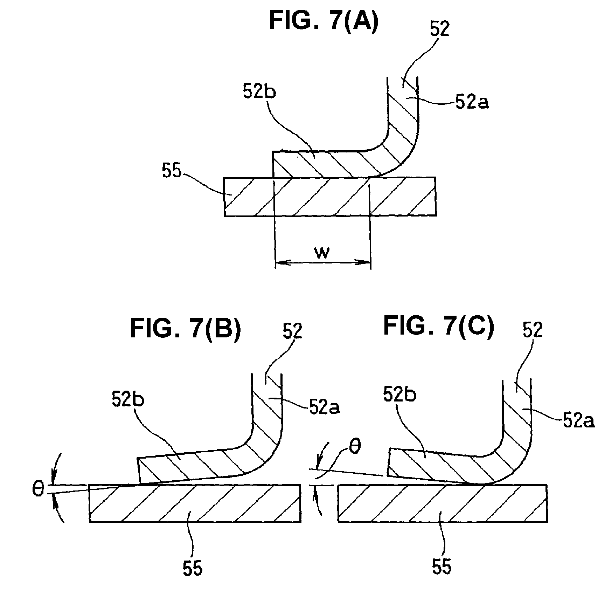

The flange portion 52b formed in an axially perpendicular flat plate shape is expected to be precisely worked so as to be widely in surface contact with the clutch plate 54 at a predetermined diametrical contact width w, as shown in Fig. 7A, however, there is a case that it is actually formed with an angle θ as shown in Fig. 7B or 7C due to a problem of work in a manufacturing process of the metal ring 52. Therefore, there is a case that a contact position with respect to the clutch plate 54 is largely varied in a diametrical direction. If a downward taper is formed at the flange portion 52b such as in Fig. 7B, the contact position with respect to the clutch plate 54 exists only at an outer peripheral edge portion of the expected contact width w, and if an upward taper is formed at the flange portion 52b such as in Fig. 7C on the contrary, the contact position with respect to the clutch plate 54 exists only at an inner peripheral edge portion of the expected contact width w. Accordingly, the contact position is extremely biased in any event. Therefore, a rattle due to an inclination or a biased abrasion is generated in the clutch plate 54 caused by the bias, so that a shift shock at a time of engaging the clutch becomes large, or a foreign sound is generated at a time of engaging the clutch. Since a countermeasure has been conventionally made by severely controlling a flatness of the flange portion 52b for preventing them, it has taken a lot of labor and time to manufacture the metal ring 52, and a parts cost has become high.

Further, there is a case that an undulation in a circumferential direction is formed in addition to the angle θ mentioned above, at the flange portion 52b formed in the axially perpendicular flat plate shape. In this case, since a pressure distribution in a circumferential direction becomes uneven with respect to the clutch plate 54, there is also a risk that the rattle caused by the inclination or the biased abrasion is generated at the clutch plate 54.

Further, there has been developed a technique that a countermeasure is achieved by interposing a leaf spring member between the flange portion and the clutch plate. However, in this case, since a parts number and an assembling man hour are increased by interposing the leaf spring member, there is a disadvantage that a parts cost and a manufacturing cost are increased (refer to patent document 2).

Patent Document 1: Japanese Unexamined Patent Publication No. 2001-132849

Patent Document 2: Japanese Patent No. 3515634

### SUMMARY OF THE INVENTION

### Problem to be Solved by the Invention

The present invention is made by taking the points mentioned above into consideration, and an object of the present invention is to provide a sealing device in which a contact position in a diametrical direction with respect to an opponent member can be stabilized and a pressure distribution in a circumferential direction with respect to the opponent member can be stabilized, without severely controlling a flatness of a pressing portion or a flange portion of a metal ring.

### Means for Solving the Problem

In order to achieve the object mentioned above, in accordance with claim 1 of the present invention, there is provided a sealing device comprising:
a metal ring; and
a seal portion such as a packing or the like supported to the metal ring;
the metal ring having an annular pressing portion provided with a predetermined width in a diametrical direction for pressing an opponent member at a time when the metal ring is displaced in an axial direction,
wherein a pressing surface of the pressing portion is formed in a circular arc cross sectional shape or a wave cross sectional shape protruding toward the opponent member.

Further, in accordance with claim 2 of the present invention, there is provided a sealing device comprising:
a metal ring; and
a seal portion such as a packing or the like supported to the metal ring;
the metal ring having an annular pressing portion provided with a predetermined width in a diametrical direction for pressing an opponent member at a time when the metal ring is displaced in an axial direction,
wherein the pressing portion is constituted by an outward flange portion integrally formed at an end of a tubular portion of the metal ring, and the flange portion is formed in a circular arc cross sectional shape or a wave cross sectional shape as a whole.

Further, in accordance with claim 3 of the present invention, there is provided a sealing device comprising:
a metal ring; and
a seal portion such as a packing or the like supported to the metal ring;
the metal ring having an annular pressing portion provided with a predetermined width in a diametrical direction for pressing an opponent member at a time when the metal ring is displaced in an axial direction,
wherein the pressing portion is constituted by an outward flange portion integrally formed at an end of a tubular portion of the metal ring, and the flange portion has a smaller thickness than the tubular portion and is formed in a circular arc cross sectional shape or a wave cross sectional shape so as to have a spring characteristic.

Further, in accordance with claim 4 of the present invention, there is provided a sealing device as recited in any one of claims 1 to 3, wherein the sealing device is constituted by a bonded piston seal used in an automatic transmission, and the opponent member is constituted by a clutch plate pressed by the metal ring of the bonded piston seal.

In the sealing device in accordance with claim 1 of the present invention provided with the structure mentioned above, since the pressing surface of the pressing portion in the metal ring is not formed in the axially perpendicular flat surface shape, but is formed in the circular arc cross sectional shape or the wave (wavy line) cross sectional shape protruding toward the opponent member (the protruding shape toward the opponent member), there is no flat surface to be controlled in flatness. Accordingly, it is not necessary to control the flatness. The circular arc cross sectional shape corresponds to a shape having one circular arc cross section and being in line contact at one position in the diametrical direction, and the wave cross sectional shape corresponds to a shape having a plurality of circular arc cross sections and being in line contact at a plurality of positions in the diametrical direction. In any event, there is an advantage that the contact position with the opponent member is not changed so much in the diametrical direction, even if somewhat of shape error is generated in the circular arc cross section. Since the pressing portion is formed in the circular arc cross sectional shape or the wave cross sectional shape, an undulation in a circumferential direction is hardly generated.

Further, in the sealing device in accordance with claim 2 of the present invention, since the flange portion of the metal ring serving as the pressing portion is not formed in the axially perpendicular flat surface shape, but is formed in the circular arc cross sectional shape or the wave cross sectional shape as a whole, it is unnecessary to control the flatness similarly to the invention in accordance with claim 1. The circular arc cross sectional shape corresponds to a shape having one circular arc cross section and being in line contact at one position in the diametrical direction, and the wave cross sectional shape corresponds to a shape having a plurality of circular arc cross sections and being in line contact at a plurality of positions in the diametrical direction. In any event, there is an advantage that the contact position with the opponent member is not changed so much in the diametrical direction even if somewhat of shape error is generated in the circular arc cross section. Since the flange portion is formed in the circular arc cross sectional shape or the wave cross sectional shape so as to have a three-dimensional surface, an undulation in a circumferential direction is hardly generated.

Further, in the sealing device in accordance with claim 3 of the present invention, since the flange portion of the metal ring serving as the pressing portion is not formed in the axially perpendicular flat surface shape, but is formed in the circular arc cross sectional shape or the wave cross sectional shape in addition to being thinned as a whole, it is unnecessary to control the flatness similarly to the invention in accordance with claim 1. The circular arc cross sectional shape corresponds to a shape having one circular arc cross section and being in line contact at one position in the diametrical direction, and the wave cross sectional shape corresponds to a shape having a plurality of circular arc cross sections and being in line contact at a plurality of positions in the diametrical direction. In any event, there is an advantage that the contact position with the opponent member is not changed so much in the diametrical direction even if somewhat of shape error is generated in the circular arc cross section. Since the flange portion is formed in the circular arc cross sectional shape or the wave cross sectional shape so as to have a three-dimensional surface, an undulation in a circumferential direction is hardly generated. Further, since the flange portion is elastically deformed on the basis of the spring characteristic caused by the thinning, the flange portion can come into close contact with the opponent member over an entire periphery.

### Effect of the Invention

The present invention achieves the following effects.

In the sealing device in accordance with claim 1 of the present invention, since the pressing surface of the pressing portion in the metal ring is formed in the circular arc cross sectional shape or the wave cross sectional shape protruding toward the opponent member, it is not necessary to control the flatness. Accordingly, it is possible to omit the work and the cost incurred for controlling the flat surface. Further, since the contact position with the opponent member is not changed so much in the diametrical direction on the basis of the cross sectional shape even if somewhat of shape error is generated, it is possible to stabilize the contact position in the diametrical direction with respect to the opponent member. Further, since the undulation in the circumferential direction is hardly generated on the basis of the cross sectional shape, it is possible to stabilize the pressure distribution in the circumferential direction with respect to the opponent member.

Further, in the sealing device in accordance with claim 2 of the present invention, since the flange portion in the metal ring is formed in the circular arc cross sectional shape or the wave cross sectional shape as a whole, it is not necessary to control the flatness. Accordingly, it is possible to omit the work and the cost incurred for controlling the flat surface. Further, since the contact position with the opponent member is not changed so much in the diametrical direction on the basis of the cross sectional shape even if somewhat of shape error is generated, it is possible to stabilize the contact position in the diametrical direction with respect to the opponent member. Further, since the undulation in the circumferential direction is hardly generated on the basis of the cross sectional shape, it is possible to stabilize the pressure distribution in the circumferential direction with respect to the opponent member.

Further, in the sealing device in accordance with claim 3 of the present invention, since the flange portion in the metal ring is formed in the circular arc cross sectional shape or the wave cross sectional shape in addition to being thinned as a whole, it is not necessary to control the flatness. Accordingly, it is possible to omit the work and the cost incurred for controlling the flat surface. Further, since the contact position with the opponent member is not changed so much in the diametrical direction on the basis of the cross sectional shape even if somewhat of shape error is generated, it is possible to stabilize the contact position in the diametrical direction with respect to the opponent member. Further, since the undulation in the circumferential direction is hardly generated on the basis of the cross sectional shape, it is possible to stabilize the pressure distribution in the circumferential direction with respect to the opponent member. Furthermore, since the flange portion is elastically deformed on the basis of the spring characteristic caused by the thinning at a time of being actuated, the flange portion can come into close contact with the opponent member over the entire periphery. Accordingly, it is possible to stabilize the pressure distribution in the circumferential direction also on the basis of this function.

Further, in the sealing device in accordance with claim 4 of the present invention, the operations and effects obtained by claims 1 to 3 mentioned above can be applied to the bonded piston seal used in the automatic transmission.

### BRIEF EXPLANATION OF DRAWINGS

Fig. 1 is a cross sectional view of a bonded piston seal in accordance with a first embodiment of the present invention;
Fig. 2A is an enlarged view of a main portion in Fig. 1;
Fig. 2B is an enlarged view of a portion B in Fig. 2A;
Fig. 3 is a cross sectional view of a main portion of a bonded piston seal in accordance with a second embodiment of the present invention;
Fig. 4 is a cross sectional view of a main portion of a bonded piston seal in accordance with a third embodiment of the present invention;
Fig. 5 is a cross sectional view of a main portion of a bonded piston seal in accordance with a fourth embodiment of the present invention;
Fig. 6 is a cross sectional view of a bonded piston seal in accordance with a prior art;
Fig. 7A is an enlarged cross sectional view of a main portion of the bonded piston seal; and
Figs. 7B and 7C are cross sectional views showing problem generating states.

### Description of Reference Numerals

- 1: bonded piston seal (sealing device)
- 2: metal ring
- 3: seal portion
- 4: tubular portion
- 5: pressing portion
- 6: flange portion
- 7: pressing surface
- 11: clutch plate (opponent member)
- 12: return spring
- 13: cancel seal
- 14: AT housing
- 15: pressure chamber
- P, P₁, P₂: contact point

### DETAILED DESCRIPTION OF PREFERRED EMBODIMENTS

The following modes are included in the present invention.
(1) A contact position in a circumferential direction with a clutch plate is stabilized by forming an outer peripheral flange portion of the BPS in a circular arc shape curved with respect to the clutch plate. This structure can be applied to an aluminum piston which is processed by a cutting work.
(2) Uniformization of a pressure distribution of the clutch plate is achieved by forming the outer peripheral flange portion of the BPS in a circular arc shape or a wave shape in addition to thinning so as to provide a spring characteristic.
(3) In accordance with the mode (1) or (2) mentioned above, since the outer peripheral flange portion of the BPS is not formed in a straight shape, it is unnecessary to control flatness. Further, a cost can be reduced by reducing a parts number and improving an assembling workability, in comparison with a case that the leaf spring is independently interposed.

### Embodiment

Next, a description will be given of embodiments in accordance with the present invention with reference to the accompanying drawings.

### First Embodiment

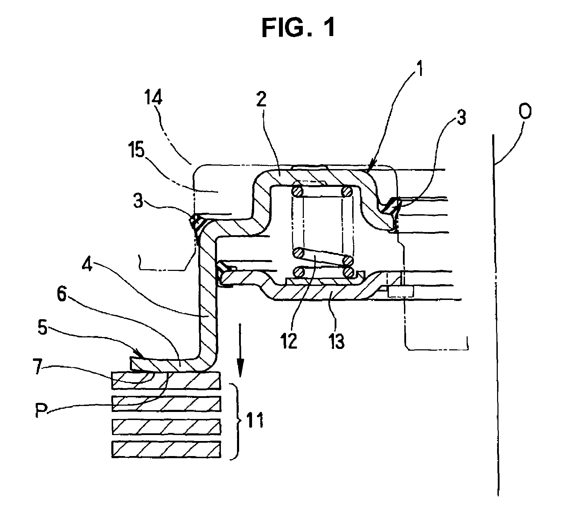

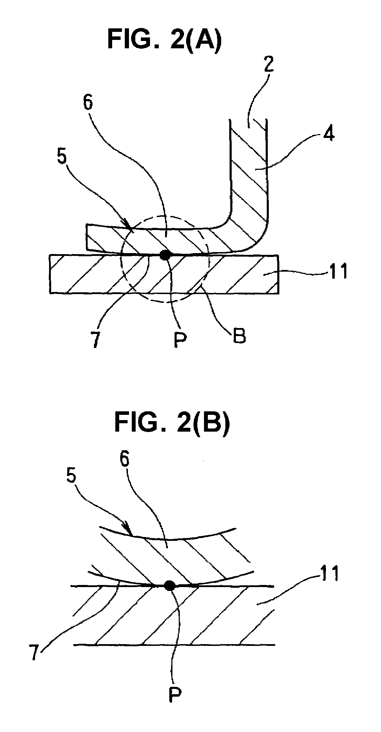

Fig. 1 shows a cross section of a bonded piston seal 1 serving as a sealing device in accordance with a first embodiment of the present invention. Fig. 2 shows a main portion thereof in an enlarged manner.

As shown in Fig. 1, the bonded piston seal 1 in accordance with the embodiment is embedded in an inner portion of a cylinder of an AT housing 14 together with a clutch plate 11, a return spring 12, a cancel seal 13 and the like. When a hydraulic pressure is introduced into a pressure chamber 15 from a pressure port (not shown), the bonded piston seal 1 is displaced downward against an elasticity of the return spring 12 so as to press an annular clutch plate 11 having a multi-disc (multilayer) clutch structure, and engages a clutch. Further, when the hydraulic pressure is drained, the bonded piston seal 1 is returned upward on the basis of an elasticity of the return spring 12. Accordingly, on the basis of this reciprocating function, the bonded piston seal 1 may be called as a piston for an automatic transmission.

The bonded piston seal 1 in accordance with the embodiment first has a metal ring 2 formed by press molding of a sheet metal (a steel plate), and a seal portion 3 constituted by a packing (a seal lip) made of a rubber-like elastic material is attached (baking bonded) to each of an outer peripheral portion and an inner peripheral portion of the metal ring 2. The seal portion 3 slidably comes into close contact with an inner surface of the housing 14 so as to seal the hydraulic pressure mentioned above or the like.

An outer periphery of the metal ring 2 is integrally provided with an outward flange portion 6 which is positioned at an end of a tubular portion 4 and serves as a pressing portion 5 with respect to the clutchplate11. If the pressing portion 5 or the flange portion 6 is formed in a flat plate shape which is perpendicular to a center axis 0 of the bonded piston seal 1, a severe flatness control is necessary as mentioned above.

Accordingly, in the embodiment, as shown in Fig. 2 in an enlarged manner, the pressing portion 5 or the flange portion 6 is formed in a circular arc cross sectional shape having one circular arc cross section protruding toward the clutch plate 11 over a whole thickness, and a pressing surface 7 of the pressing portion 5 or the flange portion 6 is formed in a circular arc cross sectional shape having one circular arc cross section protruding toward the clutch plate 11 in the same manner. Therefore, the pressing surface 7 of the pressing portion 5 or the flange portion 6 having a curved surface corresponding to one circular arc cross section comes into contact with the clutch plate 11 in a line contact state at a contact point P which is one position at a middle portion of a width in a diametrical direction of the pressing portion 5 or the flange portion 6, and presses the clutch plate 11.

Since the pressing portion 5 or the flange portion 6 formed in the circular arc cross sectional shape as mentioned above is not formed in a flat surface shape, it is not necessary to control the flatness. Accordingly, it is possible to omit the work and the cost incurred for controlling the flatness.

Further, on the basis of the cross sectional shape of the pressing portion 5 or the flange portion 6, the contact position thereof with respect to the clutch plate 11 is not changed so much in the diametrical direction, even if somewhat of shape error is generated. Accordingly, it is possible to stabilize the contact position in the diametrical direction with respect to the clutch plate 11.

Further, on the basis of the cross sectional shape of the pressing portion 5 or the flange portion 6, an undulation thereof in a circumferential direction is hardly generated. Accordingly, it is possible to stabilize a pressure distribution in the circumferential direction with respect to the clutch plate 11.

### Second Embodiment

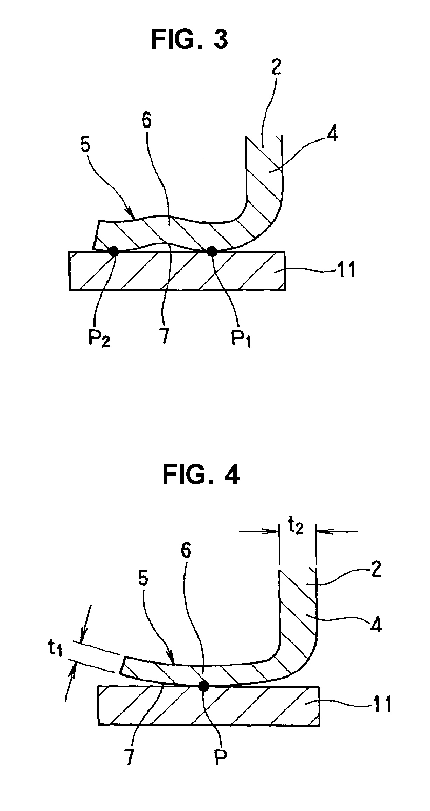

In a bonded piston seal in accordance with a second embodiment shown in Fig. 3, the pressing portion 5 or the flange portion 6 is formed in a wavy cross sectional shape having two circular arc cross sections protruding toward the clutch plate 11 over an entire thickness, and the pressing surface 7 of the pressing portion 5 or the flange portion 6 is formed in a wavy cross sectional shape having two circular arc cross sections protruding toward the clutch plate 11 in the same manner. Accordingly, the pressing surface 7 of the pressing portion 5 or the flange portion 6 having the curved surface corresponding to two circular arc cross sections comes into contact with the clutch plate 11 in the line contact state, at each of two contact points P₁ and P₂ close to an inner periphery and an outer periphery of the width in the diametrical direction of the pressing portion 5 or the flange portion 6, and presses the clutch plate 11.

In accordance with this embodiment, there is obtained an advantage that a clutch surface pressure can be optimally controlled by changing a share ratio of two contact points P₁ and P₂, in addition to the operations and effects described in the first embodiment mentioned above.

### Third Embodiment

In a bonded piston seal in accordance with a third embodiment shown in Fig. 4, the pressing portion 5 or the flange portion 6 is structured such that a thickness t₁ thereof is thinner than a thickness t₂ of the tubular portion 4, and is formed in a circular arc cross sectional shape having one circular arc cross section protruding toward the clutch plate 11 over an entire thickness so as to have a spring characteristic in an axial direction, and the pressing surface 7 of the pressing portion 5 or the flange portion 6 is formed in the circular arc cross sectional shape having one circular arc cross section protruding toward the clutch plate 11 in the same manner. Accordingly, the pressing surface 7 of the pressing portion 5 or the flange portion 6 having the curved surface corresponding to one circular arc cross section comes into contact with the clutch plate 11 in a line contact state at one contact point P which is one position at a middle portion of the width in the diametrical direction of the pressing portion 5 or the flange portion 6, and presses the clutch plate 11.

In accordance with the third embodiment, in addition to the operations and the effects described in the first embodiment mentioned above, since the pressing portion 5 or the flange portion 6 is elastically deformed at a time of being actuated on the basis of the spring characteristic in the axial direction, the pressing portion 5 or the flange portion 6 comes into close contact with the clutch plate 11 over an entire periphery. Accordingly, there is obtained an advantage that it is possible to stabilize the pressure distribution in the circumferential direction also by this function. Further, it is possible to expect a buffering effect and a rattle preventing effect by the spring characteristic.

### Fourth Embodiment

In a bonded piston seal in accordance with a fourth embodiment shown in Fig. 5, the pressing portion 5 or the flange portion 6 is structured such that the thickness t₁ thereof is thinner than the thickness t₂ of the tubular portion 4, and is formed in a wavy cross sectional shape having two circular arc cross sections protruding toward the clutch plate 11 over an entire thickness so as to have a spring characteristic in an axial direction, and the pressing surface 7 of the pressing portion 5 or the flange portion 6 is formed in the wavy cross sectional shape having two circular arc cross sections protruding toward the clutch plate 11 in the same manner. Accordingly, the pressing surface 7 of the pressing portion 5 or the flange portion 6 having the curved surface corresponding to two circular arc cross sections comes into contact with the clutch plate 11 in a line contact state at each of contact points P₁ and P₂ which are two positions close to an inner periphery and an outer periphery of the width in the diametrical direction of the pressing portion 5 or the flange portion 6, and presses the clutch plate 11.

In accordance with the fourth embodiment, in addition to the operations and the effects described in the first embodiment mentioned above, since there is an advantage that the clutch surface pressure can be optimally controlled by changing a share ratio of the contact points P₁ and P₂ at two positions. Further, since the pressing portion 5 or the flange portion 6 is elastically deformed at a time of being actuated on the basis of the spring characteristic in the axial direction, the pressing portion 5 or the flange portion 6 comes into close contact with the clutch plate 11 over an entire periphery. Accordingly, there is obtained an advantage that it is possible to stabilize the pressure distribution in the circumferential direction also by this function. Further, it is possible to expect a buffering effect and a rattle preventing effect by the spring characteristic.

## Claims

1. A sealing device (1) comprising:
a metal ring (2); and
a seal portion (3) such as a packing or the like supported to said metal ring (2);
said metal ring (2) having an annular pressing portion (5) provided with a predetermined width in a diametrical direction for pressing an opponent member (11) at a time when said metal ring (2) is displaced in an axial direction,
wherein a pressing surface (7) of said pressing portion (5) is formed in a circular arc cross sectional shape or a wave cross sectional shape protruding toward said opponent member (11).

2. A sealing device (1) comprising:
a metal ring (2); and
a seal portion (3) such as a packing or the like supported to said metal ring (2);
said metal ring (2) having an annular pressing portion (5) provided with a predetermined width in a diametrical direction for pressing an opponent member (11) at a time when said metal ring (2) is displaced in an axial direction,
wherein said pressing portion (5) is constituted by an outward flange portion (6) integrally formed at an end of a tubular portion (4) of said metal ring (2), and said flange portion (6) is formed in a circular arc cross sectional shape or a wave cross sectional shape as a whole.

3. A sealing device (1) comprising:
a metal ring(2); and
a seal portion (3) such as a packing or the like supported to said metal ring (2);
said metal ring (2) having an annular pressing portion (5) provided with a predetermined width in a diametrical direction for pressing an opponent member (11) at a time when said metal ring (2) is displaced in an axial direction,
wherein said pressing portion (5) is constituted by an outward flange portion (6) integrally formed in an end of a tubular portion (4) of said metal ring (2), and said flange portion (6) has a smaller thickness than said tubular portion (4) and is formed in a circular arc cross sectional shape or a wave cross sectional shape so as to have a spring characteristic.

4. A sealing device as claimed in any one of claims 1 to 3, wherein said sealing device (1) is constituted by a bondedpiston seal used in an automatic transmission, and the opponent member (11) is constituted by a clutch plate pressed by the metal ring of said bonded piston seal.
